# EUROPÄISCHE PATENTANMELDUNG

(11) **EP 0 921 623 A2**
(43) Veröffentlichungstag der Anmeldung: **09.06.1999**
(21) Anmeldenummer: 98122130.2
(22) Anmeldetag: 24.11.1998
(51) Int. Cl.: H02K 9/19, H02K 9/18

(54) **Elektromotor mit Läuferkühlung**

(30) Priorität: 24.11.1997 DE 19752003
(71) Anmelder: FÜRSTLICH HOHENZOLLERNSCHE WERKE LAUCHERTHAL GMBH & CO., D-72517 Sigmaringendorf-Laucherthal (DE)
(72) Erfinder: Felder, Winfried, 88326 Aulendorf (DE); Wolf, Jürgen, Dr., 38855 Wernigerode (DE)
(74) Vertreter: Schwabe - Sandmair - Marx

(57) **Zusammenfassung**

Die vorliegende Erfindung bezieht sich auf einen Elektromotor mit einer Welle und einem Läuferkörper, welcher auf der Welle angeordnet ist, wobei die Welle kühlbar ist. Weiterhin bezieht sich die Erfindung auf ein Verfahren zum Betreiben eines Elektromotors, wobei die Welle des Elektromotors gekühlt wird.

## Beschreibung

Die vorliegende Erfindung bezieht sich auf Elektromotoren, wie z. B. Asynchronmotoren, bei welchen eine Kühlung vorgenommen wird. Insbesondere bezieht sich diese Erfindung auf einen Elektromotor mit einem über die Welle gekühlten Lauferkörper.

Es ist bekannt, dass bei Asynchronmotoren die im Betrieb entstehende Verlustwärme, welche insbesondere an dem Ständerpaket und dem Läuferkörper abfällt, über die Maschinenoberfläche mittels durchströmender Luft abgeführt wird. Dazu saugt ein außerhalb des Motors angeordneter Lüfter über speziell vorgesehene Lufteintrittsöffnungen der Lüfterhaube über die Oberfläche Umgebungsluft an, die des Motors geführt wird und zur Kühlung des Ständerpakets und des Läuferkörpers dient. Dieser Kühlluftstrom führt die an der Kontaktfläche zwischen dem Außendurchmesser des Ständerpakets und der Bohrung des Motorgehäuses an das Motorgehäuse übertragene Verlustwärme an die Umgebung ab. Weiterhin ist bekannt, dass durch eine spezielle konstruktive Ausgestaltung die Verlustwärme des Läuferkörpers durch einen vorbeiströmenden Luftstrom abgeleitet wird.

Aus der DE 44 11 055 C2 ist eine Kühlvorrichtung für ein Statorblechpaket bekannt, wobei die Kühlung aus einem innerhalb jedes ständerseitigen Wicklungskopfes ringförmig die Motorachse etwa konzentrisch umgebendem Rohr besteht.

Jedoch weisen Motoren mit den oben genannten Kühlmechanismen bestimmte Leistungsgrenzen auf, die dadurch entstehen, dass das Abführen der Verlustwärme aus dem Läufer mit den beschriebenen Verfahren nur in einem beschränkten Umfang erfolgen kann. Wird z. B. eine hohe Motorleistung gefordert, so kann ein solcher Motor aufgrund der beschränkten Kühlung nur bis zu einer gewissen Grenze ausgelastet werden, so dass für eine weitere Erhöhung der zur Verfügung zu stellenden Leistung ein weiterer Motor bzw. ein Motor mit größerer Leistung erforderlich ist.

Es ist die Aufgabe der vorliegenden Erfindung die Nachteile des Standes der Technik zu verringern. Insbesondere sollen ein Elektromotor und ein Verfahren vorgeschlagen werden, mit welchen eine verbesserte Kühlung erzielt werden kann.

Diese Aufgabe wird durch einen Elektromotor mit Merkmalen des Anspruchs 1 sowie ein Verfahren mit den Merkmalen des Anspruchs 9 gelöst.

Der erfindungsgemäße Elektromotor weist eine Welle auf, auf welcher ein Läuferkörper angeordnet ist. Erfindungsgemäß ist die Welle kühlbar, so dass die vom Läuferkörper erzeugte Wärme effektiv abgeführt werden kann. Hierdurch wird der Vorteil erzielt, dass über die Verbindungsfläche zwischen Läuferkörper und Welle eine große Menge an Wärme über die Welle mit guten Wärmeleitfähigkeit und einer hohen spezifischen Wärmekapazität abgeführt werden kann und diese Verlustwärme nicht über Luft mit einer niedrigen spezifischen Wärmekapazität abgeführt werden muss. Es kann somit eine größere Menge der im Betrieb entstehenden Wärme über die Kühlung durch die Welle abgeführt werden. Indem die in dem Läuferkörper auftretende Wärme unmittelbar über die Welle abgeführt wird, kann auch die Leistungsfähigkeit der Kühlung erheblich verbessert werden. Hierdurch kann die Leistungsfähigkeit des gesamten Motors verbessert werden, so dass mit einem Motor mit erfindungsgemäßer Wellenkühlung eine Leistungssteigerung um ca. 50% gegenüber einem sonst baugleichen herkömmlichen Motor mit Luftkühlung erzielt werden kann. Die erfindungsgemäße Kühlung des Läuferkörpers bewirkt auch, dass dessen Wärme im Betrieb nicht mehr nur z. B. über eine Luftverwirbelung an die umliegenden statischen Elemente, wie z. B. das Ständerpaket abgegeben werden muß, was bisher zu einer nicht gewünschten zusätzlichen thermischen Belastung der umliegenden statischen Elemente führte. Indem die im Läuferkörper entstehende Wärme effektiv durch die erfindungsgemäße Wellenkühlung abgeführt wird, kam weiterhin auch die thermische Belastung der Wälzlager verringert werden, wodurch die Leistungsfähigkeit und Lebensdauer des Elektromotors weiter gesteigert werden kann. Die Kühlung der Welle bewirkt somit, dass der auf dieser Welle angeordnete Läuferkörper über die Kontaktfläche zwischen Welle und Läuferkörper effektiv gekühlt werden kann, d.h. die in dem Läuferkörper entstehende Wärme kann über die Welle, also über Materialien mit einer guten Wärmeleitfähigkeit und hohen spezifischen Wärmekapazität abgeführt werden, so dass die Beschränkungen der herkömmlichen Luftkühlung entfallen.

Besonders bevorzugt ist die Welle als Hohlwelle ausgebildet, so dass im Inneren der Welle ein geeignetes Kühlmedium geführt werden kam, über welches die Verlustwärme abgeleitet werden kann. Hierdurch ist es möglich mittels eines in der Hohlwelle geleiteten geeigneten Kühlmediums, bevorzugt mit hoher spezifischer Wärmekapazität, eine große Menge der erzeugten Wärme entlang der Welle von dem Läuferkörper abzuleiten. Alternativ hierzu ist es auch denkbar die Welle massiv, z. B. ganz aus Metall, auszugestalten, so dass die Verlustwärme über die Wärmeleitung des Metalls abgeführt wird, wobei es dann vorteilhaft ist die Welle z. B. an einem Ende zu kühlen, was wiederum mittels eines geeigneten Kühlmediums erfolgen kann.

Besonders bevorzugt weist die Hohlwelle ein darin angeordnetes Rohr auf, welches vorteilhaft fest angeordnet ist, d.h. sich nicht mit der Welle dreht. Hierdurch ist es möglich einen Kühlkreislauf für ein geeignetes Kühlmediums zu verwirklichen. So kann z. B. ein Kühlmedium über das Innere des Rohrs von einem Ende der Welle, wie z. B. von N-seitigen Ende, zu dem D-seitigen Ende der Welle transportiert werden, d.h. über den Bereich, in dem z.B. der Läuferkörper auf der Welle angeordnet ist. Am D-seitigen Ende der Welle kann das Kühlmedium aus dem in der Hohlwelle angeordneten Rohr austreten und entlang der Außenseite des Rohres wieder zum N-seitigen Ende der Welle zurückströmen, so dass das rückströmende Kühlmedium im Kontakt mit der Innenseite der Hohlwelle ist. Alternativ ist es möglich den Kühlkreislauf in die entgegengesetzte Richtung zu führen, d.h. dass das zugeführte Kühlmedium entlang der Außenseite des Rohres strömt, wohingegen das Kühlmedium aus der Hohlwelle über das in der Hohlwelle angeordnete Rohr abgeführt wird. Hierdurch kann z.B. ein geschlossener Kühlkreislauf verwirklicht werden, wobei das aus der Hohlwelle austretende und die Wärme des Läuferkörpers abführende Kühlmedium z.B. mittels eines Wärmetauschers wieder abgekühlt werden kann und das abgekühlte Kühlmedium wieder in die Hohlwelle eingeführt werden kann, um so den Läuferkörper kontinuierlich zu kühlen. Dabei ist es auch möglich mehr als nur ein Rohr in der Hohlwelle anzuordnen, so dass z. B. ein Kühlmedium über mehrere Rohre zu bzw. abgeführt werden kann. Weiterhin ist es auch denkbar, das in der Hohlwelle angeordnete Rohr so auszugestalten, dass sich dieses dreht, als z.B. mit der Welle verbunden ist. Die Querschnittsfläche des Rohres unterliegt keinen bestimmten Beschränkungen und kann z.B. kreisförmig sein oder einen beliebigen anderen Querschnitt aufweisen, wobei sich die Querschnittsfläche des Rohrs entlang der axialen Richtung der Hohlwelle verändern kann, um so z.B. ein bestimmtes Strömungsprofil des Kühlmediums zu erhalten, wobei auch der Innendurchmesser der Hohlwelle entlang der axialen Richtung mit veränderlichem Querschnitt ausgestaltet sein kann.

Es ist vorteilhaft an der Außenseite des in die Hohlwelle eingesetzten Rohres geeignete Elemente zur Oberflächenvergrößerung und/oder zur Beeinflussung bzw. Veränderung des Strömungsprofils eines Kühlmediums vorzusehen, so dass der Wärmeübergang zwischen strömendem Kühlmedium und Rohr verbessert werden kann. Ebenso ist es vorteilhaft entsprechende Ausgestaltungen zur Vergrößerung der Oberfläche oder Beeinflussung des Strömungsprofils des Kühlmediums an der Innenseite der Hohlwelle vorzusehen, um den verbesserten Wärmeübergang zwischen Welle und durchströmendem Kühlmedium zu erhalten. So kann z.B. über geeignet an der Innenseite der Hohlwelle vorgesehene Wendeln bzw. spiralförmig verlaufenden Erhöhungen und/oder Vertiefungen bewirkt werden, dass die Kontaktoberfläche zwischen Hohlwelle und strömendem Kühlungsmedium erhöht wird, wobei bei geeigneter Ausgestaltung der Erhöhungen bzw. Vertiefungen auch bewirkt werden kann, dass die Welle bei beginnender Drehung das Kühlmedium in eine bestimmte Richtung bewegt, so dass ein automatischer Transport des Kühlmediums durch die Hohlwelle bedingt durch die Drehung der Welle erfolgen kann. Ebenso kann ein geeigneter Mechanismus z. B. auch an dem in der Hohlwelle befindlichen Rohr vorgesehen sein, welcher dann bei einem sich drehenden Innenrohr bewirkt, dass das Kühlmedium in eine bestimmte vorzugebende Richtung transportiert wird.

Es ist vorteilhaft, dass das Kühlmedium eine geeignete Flüssigkeit, wie z.B. Wasser oder Öl ist, wobei das Kühlmedium vorteilhaft eine hohe spezifische Wärmekapazität aufweist, um eine große Menge entstehender Verlustwärme abzuführen. Besonders bevorzugt wird die Kühlflüssigkeit in einem geschlossenen Kühlkreislauf geführt, wobei außerhalb der sich drehenden Hohlwelle das austretende die Verlustwärme abführende Kühlmedium wieder abgekühlt wird, z. B. mittels vorbeiströmender Umgebungsluft oder anderer geeigneter Kühlmechanismen, um anschließend wieder gekühlt in die Hohlwelle eingeleitet zu werden.

Alternativ hierzu ist es auch möglich ein leichtflüchtiges Kühlmedium in einem Kreislauf in der Welle zu führen, wobei das leichtflüchtige Kühlmedium bevorzugt an der heißesten Stelle, also z.B. in der Nähe des Läuferkörpers, verdampft. Dabei wird das verdampfte Kühlmedium aus der Welle abgeführt, wobei ein Kühler zum Kondensieren des Kühlmediums vorgesehen werden muss, damit dieses Kühlmedium wieder in den Kühlkreislauf eingeleitet werden kann. Jedoch ist diese Art der Kühlung technisch relativ aufwendig, so dass das oben beschriebene Verfahren der Flüssigkeitskühlung bevorzugt wird.

Es wird besonders bevorzugt, dass eine Pumpe zum Pumpen bzw. Transportieren des Kühlmediums durch die Hohlwelle fest mit der Welle verbunden ist. Hierzu kann z.B. ein Pumpenlaufrad, welches geeignete Schaufelelemente aufweisen kann, mit demjenigen Ende der Welle fest verbunden sein, an welchem das Kühlmedium ein- bzw. austritt. Das Pumpenlaufrad kann durch eine bekannte Verbindungstechnik, wie z.B. Schweissen, mit der Welle verbunden werden, wobei es besonders vorteilhaft ist das Pumpenlaufrad über ein Gewinde, wie z. B. ein Innen- oder Außengewinde der Hohlwelle, mit der Hohlwelle zu verschrauben. Hierdurch kann erreicht werden, dass bei Drehung der Welle über die Drehung des damit verbundenen Pumpenlaufrads das Kühlmedium in eine bestimmte Richtung gepumpt wird, wobei ein solches Pumpenlaufrad sowohl bei der Öffnung für die Zufuhr des Kühlmediums, als auch bei der Öffnung für die Ableitung des Kühlmediums, oder auch bei beiden Öffnungen vorgesehen sein kann. Allgemein ist es nicht erforderlich, dass das Kühlmedium an der gleichen Seite der Hohlwelle ein- bzw. austritt. Es ist auch denkbar das Kühlmedium an einer Seite der Hohlwelle zuzuführen und über das andere Ende der Hohlwelle wieder abzuleiten, wobei das Kühlmedium auch mehrfach entlang der axialen Richtung der Hohlwelle geführt werden kann, so dass z.B. nach einem fünffachen Durchlauf des Kühlmediums innerhalb der Hohlwelle das dann erwärmte Kühlmedium wieder aus der Welle abgeleitet werden kann.

Es ist auch denkbar je nach Lastzustand des Motors, d.h. je nach anfallender Verlustwärme, eine darauf angepasste Menge des Kühlmediums durch die Hohlwelle durchzuführen oder die Geschwindigkeit des durchströmenden Kühlmediums über z. B. unterschiedlichen Pumpenlaufräder geeignet einzustellen.

Der oben beschriebene Mechanismus des Transports des Kühlmediums in der Hohlwelle über das Pumpenlaufrad kann sowohl nur durch das Pumpenlaufrad erfolgen, als auch in Kombination mit dem Kühlmediumtransport über eine geeignete Veränderung der Innenoberfläche der Hohlwelle bzw. der Oberfläche eines darin angeordneten Rohres, wie oben beschrieben.

Um die Kühlung des gesamten Elektromotors zu verbessern kann es vorteilhaft sein, das Ständerpaket ebenfalls über eine geeignete Flüssigkeitskühlung, welche in einem doppelwandigem Gehäuse geführt wird, abzukühlen.

Bevorzugt ist ein Wärmetauscher vorgesehen, mit welchem das in der Welle umlaufende Kühlmedium nach Austritt aus der Welle wieder abgekühlt wird, bevor es wieder in die Welle eingeleitet wird.

Die Kühlung des Motors kann verbessert werden, indem zusätzlich zur Kühlung des Läuferkörpers über die Welle eine weitere Oberflächenkühlung des Motors mit Luft vorgenommen wird, wobei hierzu vorteilhaft geeignete Elemente zum Erzeugen eines Luftstroms fest mit der Welle verbunden sein können. Dies kann z. B. ein Eigenlüfter sein, welcher z.B. am N-seitigen Ende der Welle vorgesehen ist, so dass mit dem Beginn der Drehung der Welle und somit der Drehung der damit fest verbundenen Lüfterschaufeln ein Luftstrom erzeugt wird, der die Außenfläche des zu kühlenden Motors mit Außenluft beaufschlagt. Dabei kann zur Kühlung normale Außenluft verwendet werden. Alternativ hierzu ist auch denkbar die z.B. aus einem Luft/Flüssigkeits-Kühlereinsatz bzw. Wärmetauscher für das durch die Welle fließende Kühlmedium austretende Luft über die sich drehenden Schaufelräder zu den zu kühlenden Motorelementen zu führen, um deren Wärme mittels vorbeiströmender Kühlluft abzuführen. Hierdurch kann eine kompakte Bauweise des Motors realisiert werden. Allgemein ist es hierbei vorteihaft zu kühlende Elemente mit einer hierfür geeigneten vergrößerten Oberfläche, wie z.B. geeigneten Rippen, zu versehen, um so die Kontaktfläche mit der vorbeiströmenden Kühlungsfluft zu erhöhen. Solche Kühlrippen können z.B. am Motorgehäuse und an den Lagerschilden angeordnet sein.

Vorteilhaft sind an dem Läuferkörper geeignete Wirbler vorgesehen, welche bei einer Drehung des Läuferkörpers eine Verwirbelung der im Inneren des Motors befindlichen Luft verursachen, so dass die Weiterleitung der Läuferverlustwärme an die Lagerschilde sowie über die Wickelköpfe der Ständerwicklung an das umgebende und vom äußeren Kühlluftstrom umströmte Gehäuse unterstützt wird. Diese Luftkühlung kann zusätzlich zu der erfindungsgemäßen Kühlung über die Welle verwendet werden, um die Kühlleistung des Motors weiter zu erhöhen.

Es ist vorteilhaft einen Asynchronmotor für die erfindungsgemäße Kühlung zu verwenden.

Gemäß dem erfindungsgemäßen Verfahren wird ein Elektromotor so betrieben, dass die Welle des Elektromotors gekühlt wird, so dass die oben beschriebene Vorteile erhalten werden können.

Vorteilhaft wird der Motor so betrieben, dass bei einer Drehung der Welle ein geeignetes Kühlmedium zirkulieren kann, insbesondere durch die Welle hindurchströmen kann. Die Drehung bewirkt vorteilhaft eine Strömung des Kühlmediums.

Bevorzugt wird Umgebungsluft zur Kühlung des in der Hohlwelle strömenden Kühlmediums, als auch zur Oberflächenkühlung der Oberflächenelemente verwendet.

Eine mögliche Anwendung des erfindungsgemäßen Elektromotors wird nachfolgend anhand der Verwendung einer Ausführungsform dieses Motors in einer Winde beschrieben.

Die Winde weist eine Seiltrommel auf, in welcher ein Asynchronmotor mit einem Kurzschlußläufer angeordnet ist. Dabei dient ein Frequenzumformer bzw. Frequenzumrichter zum Ansteuern bzw. Betreiben des Asynchronmotors. Weiterhin ist ein Planetengetriebe im wesentlichen koaxial zu dem Asynchronmotor angeordnet. Zum Kühlen des Asynchronmotors ist eine zwangsgeführte Flüssigkeits-Fremdkühlung vorgesehen. Weiterhin weist die Winde eine Haltebremse auf.

Durch die Flüssigkeitskühlung des Asynchronmotors, die bevorzugt sowohl den Stator, also die statischen Elemente wie z. B. das Ständerpaket, als auch den Rotor, also die sich drehenden Elemente, wie z. B. den Läuferkörper und die Welle direkt erfaßt, ist es aufgrund der wesentlich verbesserten Wärmeabfuhr möglich, die Leistung des Asynchronmotors gegenüber der herkömmlichen Ausführung mit Oberflächenluftkühlung etwa zu verdoppeln. Hierzu wird ein Kühlmedium der Flüssigkeits-Fremdkühlung für den Asynchronmotor durch einen zwangsgeführten Kühlkreislauf durch Rotor und Stator gerührt.

Damit können verschiedene Vorteile der Winde erzielt werden. So kann durch die erfindungsgemäße Kühlung ein 45 kW-Motor so verwendet werden, daß ihm eine Leistung eines herkömmlichen 90 kW Motors abverlangt werden kann. Dadurch kann man bei einer bestimmten Leistungsanforderung entsprechend kleinere Motoren verwenden, den Elektromotor mit dem Planetengetriebe kompakt anordnen und insbesondere den Elektromotor und das Planetengetriebe komplett in die Winde integrieren. Bei der erfindungsgemäßen Winde kann des weiteren, bedingt durch die effektive Kühlung von Stator und Rotor, die Einschaltdauer bis zu 100% betragen.

Die Verwendung von Frequenzumrichtern ist weiterhin vorteilhaft und wirtschaftlich interessant, da aufgrund des hohen technischen Entwicklungsstandes der Betrieb des Antriebsmotors an diesem Frequenzumrichter eine präzise Einstellung der Windendrehzahl im gesamten interessierenden Drehzahlbereich zuläßt, und das volle Antriebsmoment bereits bei geringsten Drehzahlen verfügbar ist.

Gegenüber herkömmlichen hydrostatisch angetriebenen Winden ergibt sich als weiterer Vorteil eine kompakte Bauweise der erfindungsgemäßen Winde, da der bisher erforderliche große Elektromotor mit Verteilergetriebe, Hydraulikpumpen, Ölleitungen, Öldruckventilen, großem Öltank und Hydraulikmotor entfallen kann. Der direkte elektrische Antrieb am Planetengetriebe bewirkt, daß die gesamten hydraulischen Verluste an der Pumpe, als auch Leitungsverluste sowie Verluste am Ölmotor und Verteilergetriebe entfallen.

Die Verwendung von Frequenzumrichter-Steuerungen ist vorteilhaft, da der Elektromotor auch bei Drehzahlen bis ca. 4000 rpm betrieben werden kann. Dies hat zur Folge, daß die optimale Leistung bei einer vorgesehenen Seilgeschwindigkeit bei Vollast erzielt werden kann. Ebenso ist es auch möglich, hohe Seilgeschwindigkeiten für Teillast oder im Leerhakenbetrieb zu erzielen. Sollten extrem hohe Seilgeschwindigkeiten für Teillast- und Leerhakenbetrieb vorteilhaft sein, kann durch Umschalten des erfindungsgemäßen Planetengetriebes auf eine Kleinere Übersetzung die Seiltrommeldrehzahl stark erhöht werden. Diese Umschaltung kann auch mit hängender Last im Stillstand erfolgen, da die Haltebremse im direkten Kraftfluß formschlüssig über das Planetengetriebe, unabhängig von dem Schaltmechanismus, mit der Seiltrommel verbunden bleibt. Folglich können mit dem Einsatz der erfindungsgemäßen Winde in einem Kran schnelle Umschlagzyklen erzielt werden.

Durch den verbesserten Wirküngsgrad der Winde können weiterhin Energiekosten eingespart werden.

Im Vergleich zu herkömmlichen Hydraulikwinden mit einer installierten Hochdruckhydraulik ist die Verschmutzungsgefahr durch die erfindungsgemäße Elektrowinde nichg so hoch, da für das Kühlmedium nur geringe Drücke erforderlich sind. Dies ist insbesonders von großem Vorteil beim Umschlagen von z.B. Nahrungsmitteln.

Es ist vorteilhaft, die Winde so auszustalten, daß das Kühlmedium der Flüssigkeits-Fremdkühlung nicht in Kontakt mit den elektrisch aktiven Teilen des Asynchronmotors kommt, was bei auftretenden größeren Spannungen zu Problemen führen kann.

Ebenso ist es vorteilhaft, daß die zwangsgeführte Flüssigkeits-Fremdkülung eine serielle Kühlung sowohl für den Stator als auch für den Rotor des Asynchronmotors liefert, so daß effektiv und wirtschaftlich die Verlustwärme vom stationären sowie vom rotierenden Teil des Motors abgeführt werden kann.

Bevorzugt wird als flüssiges Kühlmedium Öl verwendet. Hierdurch ist es möglich, daß die Welle des Rotors des Asynchronmotors auf Wälzlagern gelagert ist, welche durch das flüssige Kühlmedium, nämlich Öl, geschmiert werden. Natürlich können auch andere Kühlmedien, wie z.B. Wasser oder andere Flüssigkeiten mit ausreichender Wärmekapazität verwendet werden.

Es ist vorteilhaft, die Winde so auszubilden, daß die Welle des Rotors des Asynchronmotors als eine Hohlwelle ausgebildet ist, die von dem flüssigen Kühlmedium durchströmt wird. Somit kann auch diese Welle durch das Kühlmedium gekühlt werden.

Bevorzugt ist in der Hohlwelle des Rotors ein massives Rohr mit einer Außenwendel aus einem wärmeleitfähigen Werkstoff ausgebildet, wobei der wärmeleitfähige Werkstoff insbesondere Kupfer ist. Natürlich sind auch hier verschiedene andere Alternativen denkbar, wie z.B. Eisen oder bestimmte Stahlsorten. Die Aussparungen der Außenwendel zwischen der Hohlwelle und dem massiven Rohr können dann von dem flüssigen Kühlmedium durchströmt werden, um so eine wirksame Kühlung zu erzielen.

Weiterhin ist es vorteilhaft, die Winde so auszugestalten, daß das flüssige Kühlmittel auch zur Schmierung der inneren Stützlagerung dient.

Bei einer Ausführungsform ist die Haltebremse als eine hydraulisch belüftete Lamellenbremse, insbesondere eine Federdruck-Lamellenbremse, ausgebildet, die bevorzugt auf der Antriebswelle des Planetengetriebes angeordnet ist. Alternativ ist es auch denkbar, z.B. eine Magnetbremse vorzusehen, wobei jedoch auch andere Bremsen zur Verwendung bei der erfindungsgemäßen Winde in Frage kommen können. Die Haltebremse wird bevorzugt auf der von dem Asynchronmotor abgewandten Seite des Planetengetriebes angeordnet. Dadurch, daß die hydraulische belüftete Federdruck-Lamellenbremse gegenüber dem Elektromotor auf der äußeren Seite angeordnet ist, ist diese Haltebremse für den Anschluß an die Hydraulik sowie für Wartungszwecke platzgünstig angeordnet, da sie so leicht zugänglich ist.

Bevorzugt ist bei der Winde ein Inkremental-Geber zur Übertragung der festgestellten Drehzahl der Winde an die Steuerung des Frequenzumrichters bzw. Frequenzumformers vorgesehen. Dieser Inkremental-Geber liegt vorteilhaft im inneren Bereich der Haltebremse, bevorzugt auf der Antriebswelle des Planetengetriebes. Soll in diesem Bereich ein Flansch für eine Gelenkwelle angebracht werden, wird der Inkrementalgeber mit einem Radsatz achsversetzt angeordnet.

Es ist vorteilhaft, daß der Asynchronmotor ein doppelwandiges Gehäuse mit einem wendelförmigen Kühlkanal aufweist. Der D-seitige Lagerschild des Asynchronmotors weist vorteilhaft einen Kühlkanal auf, welcher eine Verbindung zwischen dem Kühlkanal in der Welle und dem Kühlkanal in dem doppelwandigen Gehäuse herstellt.

Ebenso vorteilhaft weist der N-seitige Lagerschild einen Kühlkanal für die Zuleitung und/oder die Ableitung des flüssigen Kühlmediums auf. Dadurch kann ein Kühlkreislauf zur Kühlung des Motors durch das Kühlmedium geschaffen werden.

Es ist vorteilhaft, den N-seitigen Lagerschild des Asynchronmotors so auszugestalten, daß er als Tragelement für die Seiltrommel-Lagerung dient. Insbesondere ist er mit dem Windenbock verschraubt.

Die Unterbringung des Elektromotors in der Seiltrommel ist bevorzugt somit so gestaltet, daß das Gehäuse zum Abstützen des Drehmomentes am Windenbock zugleich Lagerzapfen für die Lagerung der Seiltrommel selbst ist. An der inneren Seite dient ein Wälzlager auf dem Elektromotor zur Abstützung auf dem äußeren Mantel des Planetengetriebes, der mit der Seiltrommel verbunden ist.

Es ist vorteilhaft, das flüssige Kühlmedium in einem Kreislauf mit einem Wärmetauscher zu führen. Dabei weist der Wärmetauscher vorteilhaft eine Pumpe und ein von einem Lüfter gekühltes Wärmetauscherelement auf.

Bevorzugt dient das flüssige Kühlmedium auch zur Betätigung der Haltebremse, insbesondere einer Lamellenbremse.

Der Kühlmedium-Kreislauf weist vorteilhaft mindestens einen Druckspeicher zum Aufbau des Druckes für die Betätigung der Haltebremse der Winde auf.

Bevorzugt weist der Wärmetauscher wenn erforderlich mindestens zwei Wärmetauscherelemente für die Kühlung des Planetengetriebes und des Asynchronmotors auf.

Es ist vorteilhaft, die Winde so auszugestalten, daß ein Schrank für die Aufnahme der elektronischen Komponenten in den Windenbock integriert ist. Damit stellt die Winde mit integriertem Elektromotor und einem Frequenzumrichter eine in sich komplette Antriebseinheit dar. Hierdurch ist für den praktischen Gebrauch ein erheblich geringerer Montageaufwand als bei den herkömmlichen Winden erforderlich, da sowohl die mechanischen und hydraulischen als auch die elektrischen Elemente einfach montiert werden können.

Bevorzugt werden in einem verbleibenden Zwischenraum zwischen dem Elektromotor und/oder dem Planetengetriebe auf der einen Seite und der Seiltrommel auf der anderen Seite schallisolierende Dämmaterialien angeordnet, so daß die Geräuschentwicklung der Winde erheblich verringert werden kann.

Es ist vorteilhaft, die Winde so auszugestalten, daß diese einfach mit seitlichen Haltelementen zur Abstützung bzw. Aufnahme von Seillast und Reaktionsmoment, wie z.B. Blechen, durch Bolzen oder Verschrauben verbunden werden kann. Somit kann die Winde als eine komplette einbaufertige Einheit ausgebildet werden, so daß z.B. ein Kran, in welchem diese Winde verwendet wird, in seiner Stahlbaukonstruktion vereinfacht wird.

Bevorzugt ist ein Sonnenrad einer Antriebsstufe eines Planetengetriebes der Winde zur Änderung der Gesamtübersetzung durch einen Zylinder in axialer Richtung verschiebbar und kann wahlweise mit Planetenrädern der ersten Planetenstufe oder mit einem freien Glied der Planetenstufe formschlüssig verbunden werden, um eine um den Stufensprung der ersten Planetenstufe reduzierte Gesamtübersetzung des Planetengetriebes zu bewirken.

Es ist weiterhin möglich den Inkrementalgeber über ein Radsatz achsversetzt am vorderen Ende der Haltebremse anzuordnen. Dadurch kann ein Flansch am vorderen Ende der Haltebremse angebaut werden, wobei mit diesem Flansch eine in etwa in gleicher Achse spiegelbildlich angeordnete zweite komplette Winde über eine Gelenkwelle verbunden bzw. mechanisch synchronisiert werden kann.

Vorteilhaft ist das Sonnenrad einer mittleren Planetenstufe des Planetengetriebes der Winde mit der Haltebremse verbunden und am Ende dieser Wellenverbindung ist ein Flansch für den Anschluß einer Gelenkwelle eingeordnet.

Die Erfindung wird nachfolgend anhand von Ausführungsbeispielen unter Bezugnahme auf die beiliegenden Zeichnungen erläutert. Es zeigen:

Die oben beschriebenen Ausführungsformen des Motors können auch bei einem Motor für eine andere Verwendung als für eine Winde vorgesehen sein.
- Fig. 1a: eine schematische Querschnittsansicht einer Winde;
- Fig. 1b: eine schematische Querschnittsansicht einer schaltbaren Winde
- Fig. 2: ein erstes Beispiel für einen Kreislauf des Kühlmediums;
- Fig. 3: ein zweites Beispiel für einen Kreislauf des Kühlmediums;
- Fig. 4: eine perspektivische Ansicht der Winde;
- Fig. 5: ein Ausführungsbeispiel mit zwei Winden in einem Windenbock; und
- Fig. 6: eine Ausführungsform eines erfindungsgemäß gekühlten Motors

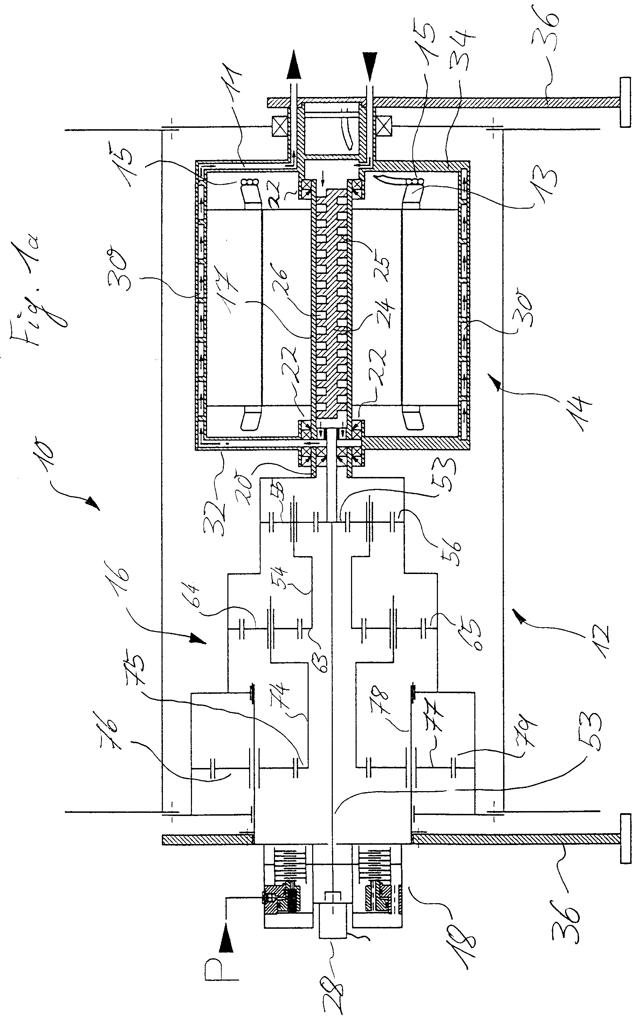

Wie aus Fig. 1a ersichtlich, ist bei der Winde 10 eine Seiltrommel 12 zwischen zwei Windenböcken 36 angeordnet. Die Seiltrommel 12 ist drehbar in den Windenböcken 36 gelagert und weist in ihrem Inneren ein Planetengetriebe 16 und einen Drehstrom-Asynchronmotor 14 auf. Dabei wird das Planetengetriebe 16 von dem Drehstrom-Asynchronmotor 14 angetrieben, welcher auf einer Seite fest mit dem Windenbock 36 verbunden ist.

Der Asynchronmotor 14 treibt über seine Antriebswelle 17 ein Sonnenrad 53 des Planetengetriebes 16 an.

Das Sonnerrad 53 der Antriebsplanetenstufe wird zentral durch das Planetengetriebe 16 bis zur Haltebremse 18 hindurchgeführt. Sonnenrad 53, Steg 54, Planetenräder 55 und Hohlrad 56 bilden zusammen die erste Planetenstufe; Sonnerrad 63, Steg 74, und Planetenräder 64 und Hohlrad 65 bilden zusammen die zweite Planetenstufe; Sonnenrad 75, Steg 78, Planetenräder 76 und Hohlrad 79 bilden zusammen die dritte Stufe des Planetengetriebes 16. Die Hohlräder 56, 65 und 79 sind zu einem umlaufenden Gehäuse miteinander gekoppelt und mit der Seiltrommel 12, z.B. durch Verschrauben drehfest verbunden.

Der Steg 78 der Abtriebsplanetenstufe ist z.B. durch Verschrauben drehfest mit dem Windenbock 36 zur Abstützung des Reaktionsmomentes verbunden.

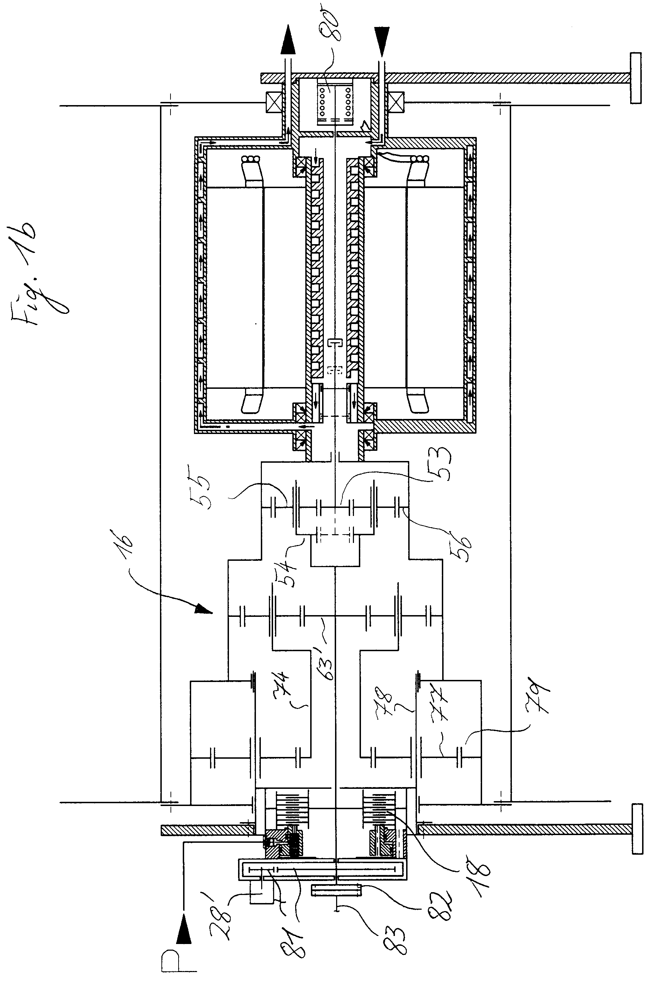

Wie in Fig. 1b dargestellt, ist eine alternative Ausführungsform des Planetenge- triebes 16 ein durch einen Zylinder so verschiebbares Sonnenrad 63' der Antriebs- planetenstufe. Ist das Sonnenrad 63' mit den Planetenrädern 55 im Eingriff, hat das Planetengetriebe 16 die größte Übersetzung für den Vollastbetrieb. Wird das Sonnenrad 63' durch Betätigung des Zylinders 80 aus dem Eingriff mit den Planetenrädern 55 gebracht und mit dem freien Glied 54 oder 56 der Planetenstufe formschlüssig verbunden, wird eine um den Stufensprung der ersten Planetenstufe reduzierte Gesamt-Übersetzung des Planetengetriebes 16 wirksam. In dieser Stellung kann für den Teillast- und Leerhakenbetrieb eine sehr hohe Seilgeschwindigkeit erreicht werden. Bei dieser alternativen Ausführungsform nach Fig. 1b des Planeten- getriebes 16 ist das Sonnenrad 63' mit der Haltebremse 18 verbunden. Der über einen Radsatz 81 achsversetzt angeordnete Inkrementalgeber 28 gestattet den Anbau eines Flansches 82 am vorderen Ende der Haltebremse 18. Mit diesem Flansch 82 kann eine in etwa gleicher Achse spiegelbildlich angeordnete zweite komplette Winde über eine Gelenkwelle 83 verbunden bzw. mechanisch synchronisiert werden. Solche spiegelbildlich angeordneten und im Antriebsstrang mechanisch verbundenen Winden werden bevorzugt bei Containerkranen verwendet.

Der Drehstrommotor 14 ist auf der inneren Seite auf einem Gehäuse 20 des Planetengetriebes gelagert und von einem doppelwandigen Gehäuse 30 mit einem D-seitigen Lagerschild 32 und einem N-seitigen Lagerschild 34 umgeben, durch welche, wie durch die Pfeile angedeutet, ein Kühlmedium strömen kann. Dabei weist das Gehäuse 30 einen wendelförmigen Kühlkanal auf.

Der N-seitige Lagerschild 34, der auf der dem Planetengetriebe 16 abgewandten Seite des doppelwandigen Gehäuses 30 angeordnet ist, ist somit so ausgebildet, daß ein Kühlmedium hindurchströmen kann. Weiterhin ist der N-seitige Lagerschild 34 mit dem Windenbock 36 verschraubt und dient somit als Tragelement für die Seiltrommel-Lagerung. In dem D-seitigen Lagerschild 32, der auf der gegenüberliegenden Seite des doppelwandigen Gehäuses 30 zu dem N-seitigen Lagerschild 34 angeordnet ist, fließt ebenfalls ein Kühlmedium. Wie aus Fig. 1 ersichtlich, weisen der D-seitige Lagerschild 32 und der N-seitige Lagerschild 34 Zu- bzw. Ableitungen für das Kühlmedium zu dem Gehäuse 30 auf, das dann durch das doppelwandige Gehäuse 30 von dem D-seitigen Ende des doppelwandigen Gehäuses 30 zu dem N-seitigen Ende strömt. Wie rechts in Fig. 1 durch die dicken Pfeile angedeutet, wird das Kühlmedium auf der dem Planetengetriebe 16 abgewandten Seite des Drehstrom-Asynchronmotors 14 zu- bzw. abgeführt. Die Zu- bzw. Ableitungen des Kühlmediums sind im Bereich der Drehachse parallel zu dieser versetzt angeordnet. Das eingeleitete Kühlmedium tritt, wie aus den Pfeilen in Fig. 1 ersichtlich, in die Hohlwelle 17 ein, welche auf beiden Seiten Wälzlager 22 aufweist. In der Hohlwelle 17 ist ein Massivrohr 24 aus Kupfer mit einer Außenwendel 25 angeordnet, welche verschiedene Aussparungen 26 aufweist. Durch diese Aussparungen 26 der Außenwendel 25 strömt das eingeleitete Kühlmedium auf einer wendelförmigen Bahn, um so das Massivrohr 24 und damit auch die Hohlwelle 20 zu kühlen. Auf der dem Planetengetriebe 16 zugewandten Seite des Massivrohres 24 tritt das Kühlmedium aus der Außenwendel 25 aus und wird durch das D-seitige Lagerschild 32 radial nach außen zu dem doppelwandigen Gehäuse 30 geführt, so daß es wieder zurück durch das doppelwandige Gehäuse 30 und das N-seitige Lagerschild 34 nach außen geführt wird. Somit werden Stator und Rotor des Asynchronmotors 14 seriell gekühlt.

Innerhalb des Drehstrom-Asynchronmotors 14 ist das bewickelte Statorpaket 13 erkennbar, das Ableitungen 15 aufweist. Somit kommt das zwangsgeführte Kühlmedium nicht in Kontakt mit den elektrisch aktiven Teilen des Drehstrom-Asynchronmotors 14.

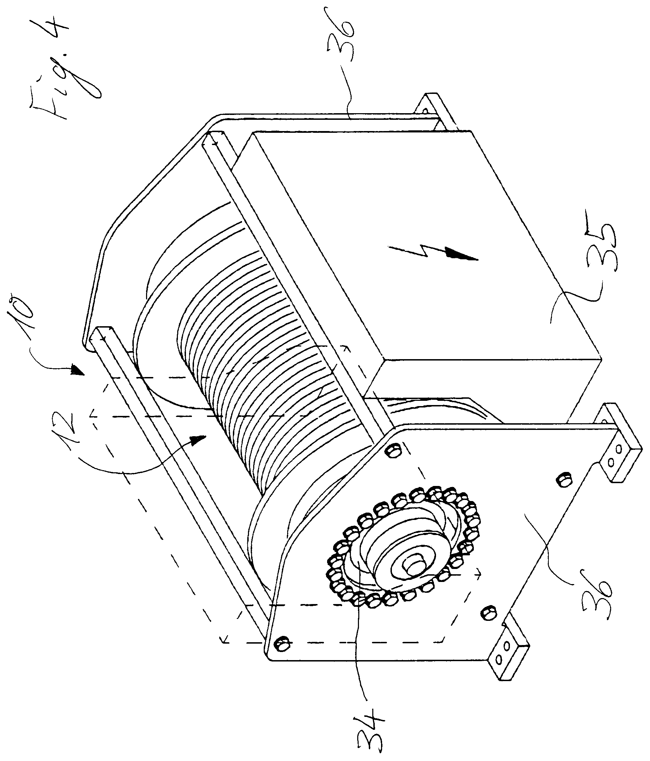

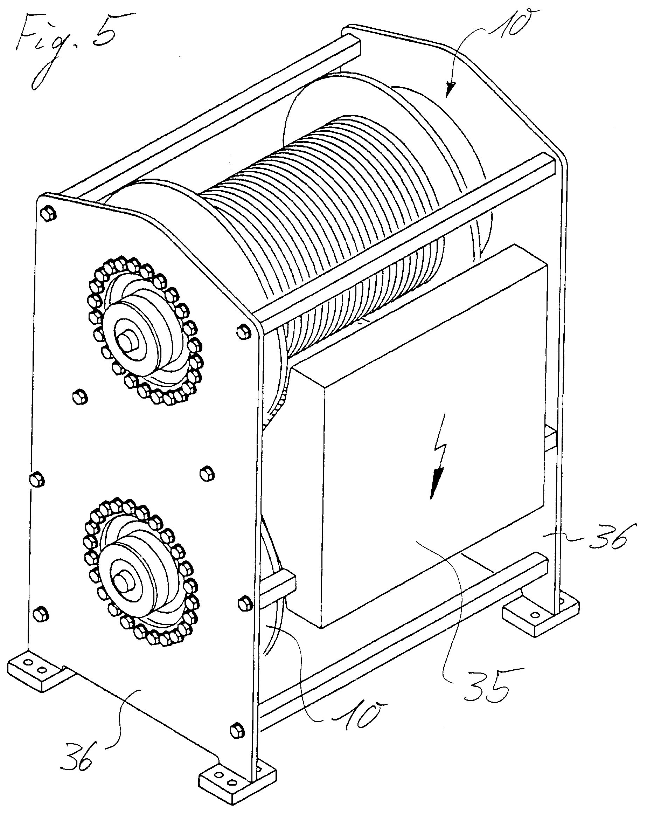

Der Drehstrom-Asynchronmotor 14 treibt über seine Abtriebswelle 17 an der dem rechten Windenbock 36 gegenüberliegenden Seite das Planetengetriebe 16 an, über welches die Seiltrommel 12 der Winde 10 angetrieben wird. Auf der dem Drehstrom-Asynchronmotor 14 gegenüberliegenden Seite des Planetengetriebes 16 ist ein Inkremental-Geber 28 zur Übertragung der Drehzahl an die Steuerung des Frequenzumformers bzw. Frequenzumrichters, untergebracht im Schaltschrank 35, wie aus Fig. 4 und 5 ersichtlich, vorgesehen. Dieser Inkremental-Geber 28 ist auf der Abtriebswelle des Planetengetriebes 16 angeordnet.

Ebenso ist eine Haltebremse 18 auf der von dem Drehstrom-Asynchronmotor 14 abgewandten Seite des Planetengetriebes 16 vorgesehen. Diese Haltebremse 18 ist als hydraulisch belüftete Federdruck-Lamellenbremse ausgebildet und ebenfalls auf der Antriebswelle des Planetengetriebes 16 angeordnet. Über das mit "P" gekennzeichnete Ansteuerelement kann die Haltebremse 18 mit Hydraulikdruck gelüftet werden. Die Federdruck-Lamellenbremse schließt über Federkraft und hält die Welle des Planetengetriebes 16 fest. Das flüssige Kühlmittel wird auch zur Betätigung der Lamellenbremse verwendet.

Wird als flüssiges Kühlmedium Öl verwendet, so können mit diesem Kühlmedium die Wälzlager 22, die die Welle 17 des Rotors des Asynchronmotors 14 lagern, geschmiert werden. Ebenso kann die innere Stützlagerung am Gehäuse 20 mit dem als flüssiges Kühlmedium verwendeten Öl geschmiert werden. Dabei wird das Kühlmedium jedoch so geführt, daß es nicht in Kontakt mit den elektrisch aktiven Teilen des Drehstrom-Asynchronmotors 14 kommt, indem es vom äußeren Wälzlager 22 durch die Welle 17 des Rotors des Drehstrom-Asynchronmotors 14 zu dem inneren Wälzlager 22, durch den Kühlkanal des D-seitigen Lagerschilds 32, den wendelförmigen Kühlkanal des doppelwandigen Gehäuses 30 und den Kühlkanal des N-seitigen Lagerschilds 34 wieder nach außen geleitet wird.

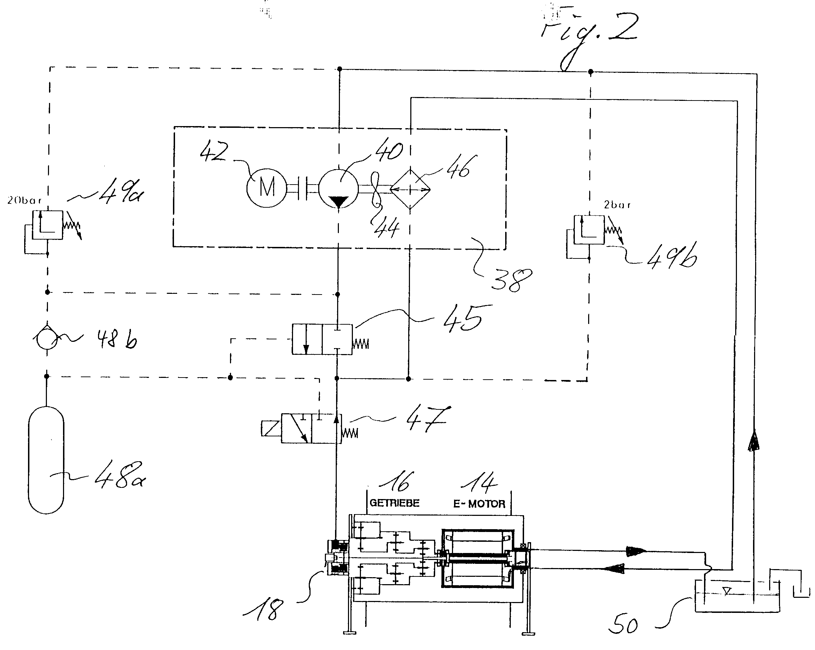

Fig. 2 zeigt ein erstes Beispiel eines Kreislaufes für das Kühlmedium. Die Pumpe 40 und der Wärmetauscher 46 bilden zusammen mit einem Lüfter 44, welcher den Wärmetauscher 46 mit Luft durchströmt, und einem Motor 42 für die Pumpe 40 und/oder den Lüfter 44 ein Kühlaggregat 38. Das Kühlmedium wird von der Pumpe 40 aus einem entlüfteten Tank 50 angesaugt, durch den Wärmetauscher 46 und durch den Drehstrom-Asynchronmotor 14 wieder zurück zum Tank 50 gepumpt. Das flüssige Kühlmedium wird somit ständig in einem Kreislauf zwischen dem Elektromotor 14 und dem Kühlaggregat 38 geführt.

Das Umschaltventil 45, das Magnet-Betätigungsventil 47, der Druckspeicher 48a, das Rückschlagventil 48b und das Überdruckventil 49a dienen zur Aufrechterhaltung eines Mindestschaltdruckes von z.B 12 bar und eines Maximalschaltdruckes von z.B. 18 bar zur Betätigung der Haltebremse 18 am Anschluß P, wie in Fig. 1a und 1b gezeigt. Sobald der Druck im Druckspeicher 48a z.B. unter 12 bar abfällt, wird das Umschaltventil 45 wie gezeichnet automatisch mit Federkraft geschlossen und die Pumpe 40 fördert über das Rückschlagventil 48b kurzzeitig das Öl in den Druckspeicher 48a. Wenn z.B. 18 bar erreicht sind, öffnet das Umschaltventil 45 wieder, die Flüssigkeit kann von der Pumpe 40 wieder drucklos über den Wärmetauscher 46 und den Elektromotor 14 zum Tank 50 gefördert werden. Das Rückschlagventil 48b sperrt den Flüssigkeitsdruck im Druckspeicher.

Ein Signal aus der elektrischen Steuerung des Motors 14 öffnet und schließt das Magnet-Betätigungsventil 45 zur Aussteuerung der Haltebremse 18. Das Überdruckventil 49b dient lediglich zur Absicherung des quasi drucklosen Flüssigkeits-Kreislaufes.

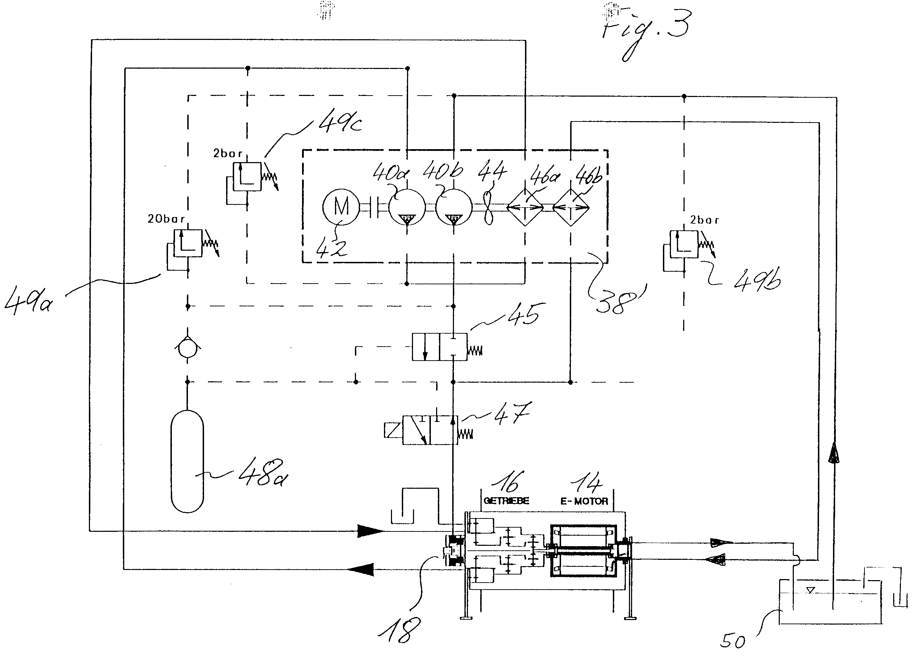

Fig. 3 zeigt eine alternative Ausführungsform zweier vollständig getrennter Kreisläufe gleicher oder unterschiedlicher Flüssigkeitsmedien. Dabei sind im Unterschied zu dem in Fig. 2 gezeigten Kreislauf zwei Wärmetauscher 46a und 46b vorgesehen, die der Kühlung der flüssigen Kühlmedien dienen, welche getrennt dem Planetengetriebe 16 und Elektromotor 14 zugeführt werden. Entsprechend weist das Kühlaggregat 38' auch zwei Pumpen 40a und 40b auf. Wie in Fig. 3 gezeigt, werden die Pumpen 40a und 40b sowie der Lüfter 44 zum Kühlen der Wärmetauscher 46a und 46b von einem Motor 42 angetrieben. Für den Wärmetauscher 46a ist ein weiteres Überdruckventil 49c vorgesehen.

Wie aus Fig. 4 ersichtlich, ist der N-seitige Lagerschild 34 des Drehstrom-Asynchronmotors 14 mit dem Windenbock 36 als Tragelement für die Seiltrommel-Lagerung verschraubt. Ein Schrank 35 für die Aufnahme der elektronischen Komponenten ist in den Windenbock 36 integriert, nämlich in dem Raum zwischen den beiden Windenböcken 36 untergebracht. Der Schrank 35 kann auch an der gegenüberliegenden Seite der Seiltrommel 12 angeordnet sein, wie durch die gestrichelten Linien gezeigt.

Fig. 5 zeigt eine Ausführungsform mit zwei Winden 10 in einem Windenbock 36, wobei jede der Winden 10 wie oben beschrieben ausgestaltet sein kann. Die beiden Winden 10 können unabhängig voneinander betrieben werden, indem die zugehörigen, in ihrem Inneren untergebrachten Elektromotoren entsprechend angesteuert werden.

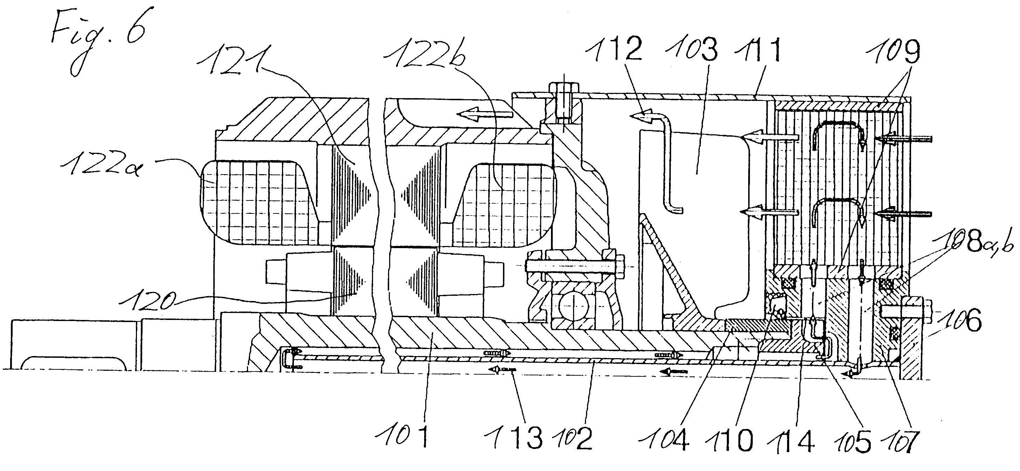

Figur 6 zeigt eine Ausführungsform eines erfindungsgemäßen Motors, wobei die Welle 101 eines Asynchronmotors unter dem Lauferkörper 120 als Hohlwelle ausgebildet ist.

Am N-seitigen Ende der Hohlwelle 101 ist ein Pumpenlaufrad 105 in ein Innengewinde der Hohlwelle 101 eingeschraubt. Das Pumpenlaufrad 105 weist mehrere Schaufelelemente auf, welche bei Drehen der Welle 101 bewirken, dass ein in der Hohlwelle 101 befindliches Kühlmedium in der in Figur 6 durch Pfeile 113 gekennzeichneten Richtung strömt.

Eine Lüfterhaube 111 ist N-seitig mit einem Wärmetauscher, wie z. B. einem Luft-/Flüssigkeits-Kühlereinsatz 109 versehen. In dem Kühlereinsatz 109 wird das die Abwärme ableitende Kühlmedium, welches aus der Hohlwelle 101 austritt, mittels der Umgebungsluft durch Wärmetausch abgekühlt, und wieder der Hohlwelle 101 zugeführt. An dem N-seitigen Ende der Welle 101 ist ein Eigenlüfter 103 bestehend aus mit dem Lüfterteller verbundenen Schaufeln bzw. mehreren fest mit der Welle 101 verbundenen Schaufelelementen vorgesehen. Eine Distanzbuchse 104 dient zur Fixierung des Lüfters 103 in der gewünschten Stellung. Somit kann bei Drehung der Welle 101 über den Lüfter 103 Luft zur Abkühlung des Kühlmediums durch den Kühler 109 geführt werden.

Eine Lüfterhaubennabe 107 ist N-seitig mit einer Abschlusscheibe 106 mit einem starren Rohreinsatz 102 versehen, welcher in die Hohlwelle 101 bis zum D-seitigen Wicklungskopf 122a hineinragt, und welcher an seinem Außendurchmesser zur Oberflächenvergrößerung z. B. Wendeln tragen kann. Die Nabe 107 der Lüfterhaube 111 ist mit zwei radialen Bohrungen 108 versehen, einer Bohrung 108b für den Eintritt des Kühlmediums in das in der Hohlwelle 101 befindliche starre Rohr 102, sowie einer Bohrung 108a für die Weiterleitung des Kühlmediums an den Luft-/Flüssigkeits-Kühler 109 nach Aufnahme der Verlustwärme aus dem Lauferkörper 120.

Die Lüfterhaube 110 ist in der in Figur 6 gezeigten Ausführungsform am N-seitigen Lagerschild befestigt.

Dreht sich der Läuferkörper 120 und die damit fest verbundene Hohlwelle 101, so wird durch das am N-seitigen Ende der Hohlwelle 101 fest verschraubte Pumpenlaufrad 105 ein Strom des Kühlmediums im Inneren der Hohlwelle 101 durch das Rohr 102 bewirkt, wie durch die Pfeile 113 in Figur 6 angedeutet.

Um den in der Nabe 107 der Lüfterhaube 111 ausgebildeten engen Pumpenspalt 114 gegenüber dem Lüfter 113 hinsichtlich eines Austritts des Kühlmediums abzudichten, ist ein Radialwellendichtring 110 vorgesehen.

Wird der in Figur 6 gezeigte Motor in Betrieb gesetzt, so dreht sich der Lauferkörper 120 und mit ihm die Hohlwelle 101. Das in der Hohlwelle 101 befindliche Kühlmedium wird über das Pumpenlaufrad 105 in Bewegung gesetzt und kann so die Von dem Läuferkörper 120 über die Hohlwelle 101 geleitete Verlustwärme aus der Hohlwelle 101 ableiten. Das Kühlmedium strömt durch die radiale Bohrung 108a zu dem Kühlereinsatz 109 wo es mit durchströmender Außenluft abgekühlt wird, um anschließend über die radiale Bohrung 108b in den Rohreinsatz 102 eingeleitet zu werden, so dass erneut Verlustwärme von der Hohlwelle 101 bzw. dem Lauferkörper 120 aufgenommen und abgeleitet wird. Die durch den Kühlereinsatz 109 hindurchtretende Umgebungsluft trifft nach dem Abkühlen des Kühlmediums in dem Kühlereinsatz 109 in der gezeigten Ausführungsform auf den Lüfter 103, und wird von diesem sich drehenden Lüfter 103 zu den anderen zu kühlenden Elementen des Motors wie z.B dem Ständerpaket 121 und den Wicklungsköpfen 122a und 122b geführt, wo diese in geeignet ausgebildete Kühlkanäle zwischen entsprechend ausgebildeten Gehäuserippen geblasen wird.

Mit der in Figur 6 gezeigten Ausführungsform des erfindungsgemäßen Motors kann eine kompakte Bauweise erzielt werden, da der Kühler 109 in die Lüfterhaube 111 integriert ist. Hierdurch ergeben sich auch vorteilhafte Effekte, da der motoreigene Lüfter 103 sowohl zur Oberflächenkühlung des Motorgehäuses bzw. bestimmter Motorelemente verwendet werden kann, als auch zur Abführung der Verlustwärme des Kühlers 109, welche über den Wärmetausch mit dem Kühlmedium aus der Hohlwelle 101 zugeführt wurde.

Damit können vorhandene Elektromotoren einfach durch Austausch der Läuferwelle 101 bzw. der Lüfterhaube 111 umgerüstet werden, wobei ein übliches Rippengehäuse beibehalten werden kann.

## Patentansprüche

1. Elektromotor mit:
a) einer Welle (101); und
b) einem Lauferkörper (120), welcher auf der Welle (101) angeordnet ist;
**dadurch gekennzeichnet,** dass:
c) die Welle (101) kühlbar ist.

2. Motor nach Anspruch 1, dadurch gekennzeichnet, dass die Welle (101) eine Hohlwelle ist.

3. Motor nach Anspruch 2, wobei in der Hohlwelle (101) mindestens ein Rohr (102) vorgesehen ist.

4. Motor nach Anspruch 2 oder 3, wobei an der Innenseite der Hohlwelle (101) und/oder an einer Oberfläche des Rohres (102) Elemente zur Vergrößerung der Oberfläche und/oder zur Beeinflussung des Strömungsverhaltens eines Kühlmediums vorgesehen sind.

5. Motor nach einem der Ansprüche 2 bis 4, dadurch gekennzeichnet, dass eine Flüssigkeitskühlung zum Abführen von Wärme von der Hohlwelle (101) vorgesehen ist.

6. Motor nach einem der vorhergehenden Ansprüche, dadurch gekennzeichnet, dass ein Pumpelement (105) mit der Welle fest verbunden ist.

7. Motor nach einem der vorhergehenden Ansprüche, wobei ein Wärmetauscher (109) vorgesehen ist, über welchen ein hindurchströmendes Kühlmedium mittels Umgebungsluft abgekühlt werden kann.

8. Motor nach einem der vorhergehenden Ansprüche, wobei ein Lüfterelement (103) mit der Welle (101) verbunden ist, welches bei Drehen der Welle (101) einen Luftstrom zur Oberflächenkühlung des Motors erzeugt.

9. Verfahren zum Betreiben eines Elektromotors, dadurch gekennzeichnet, dass die Welle (101) des Elektromotors gekühlt wird.

10. Verfahren nach Anspruch 9, wobei durch die Drehung der Welle (10) ein Kühlmedium durch die Welle (101) hindurchgeführt wird.

11. Verfahren nach Anspruch 9 oder 10, wobei Umgebungsluft zur Kühlung des Kühlmediums und/oder zur Oberflächenkühlung des Motors verwendet wird.
